# EUROPEAN PATENT APPLICATION

(11) **EP 2 009 869 A1**
(43) Date of publication of application: **31.12.2008**
(21) Application number: 07301150.4
(22) Date of filing: 26.06.2007
(51) Int. Cl.: H04L 29/06, H04L 12/22

(54) **Secure interface box and method for protecting a connection with such a box**

(71) Applicant: Thomson Licensing, 92100 Boulogne-Billancourt (FR)
(72) Inventor: Chapel, Claude, 35200 Rennes (FR); Le Bolzer, Françoise, 35000 Rennes (FR); Jeanne, Ludovic, 35200, Rennes (FR)
(74) Representative: Ruellan-Lemonnier, Brigitte

(57) **Abstract**

A secure interface box (210) for connecting a network (100) and a device (165) unable to protect data according to a protection method used in the network (100). The interface box (210) stores a secret which is used to protect communication between the network (100) and the device (165). The interface box (210) further monitors that the connection to the device (165) remains unbroken, and erases the secret in case the connection is broken. Also provided is a method.

## Description

### FIELD OF THE INVENTION

The invention is generally directed to digital content protection, and more specifically to the creation of secure networks to protect digital content.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Digital content, such as films that hereinafter will be used as an example, is very coveted, for example by pirates who wish to disseminate it as early as possible, usually for financial gain.

In order to protect a film, it is important to cover all the steps of the processing chain, from the initial capture (i.e. filming), through post-processing and often all the way to the end user. This invention is primarily directed to allow a secure connection between a secured Internet Protocol (IP) infrastructure defined for the studio production issue and a production device, stranger to the security policy and means of this infrastructure.

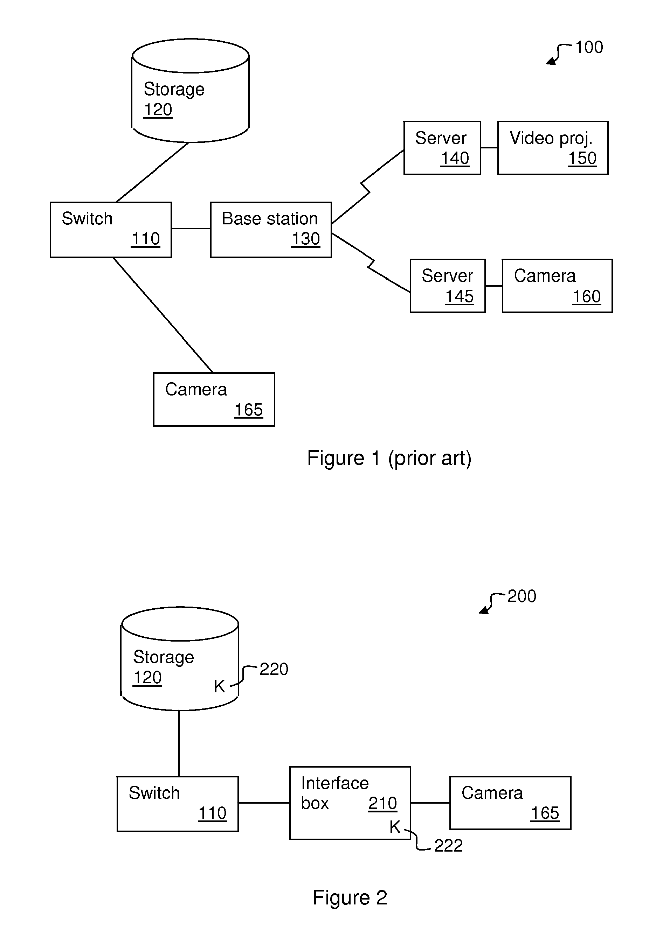

Figure 1 illustrates a simplified, exemplary prior art network used during filming. The network 100 comprises an Ethernet switch 110, storage 120 for production content, a base station 130 for radio communication with a first local server 140 connected to a video projector 150 and a second local server 145 connected to a first film camera 160. The network 100 further comprises a second film camera 165 connected by wire to the switch 110.

One way of protecting the content in the network 100 is to use encryption, for example by encrypting each link, with a possible exception of the links to the switch 110 in order to speed up its switching capabilities. To do so the method of protection can consist in encrypting the payload of the IP packets sent in the network, while keeping the header unencrypted for easy routing. The access to the network can be secured and managed by an authentication process such as a challenge response protocol.

Regardless of how the encryption and authentication is applied, a problem occurs when a device is not able to conform to the encryption and/or authentication method used in the network. If, for example, the second camera 165 is unable to encrypt the content as required in the network, it would have to send the content unencrypted, which leads to a security problem in that the content is more likely to be intercepted, especially if it is transmitted by radio at one point or another. An exemplary reason for this non-compliance is if the device is not adapted to receive the necessary encryption key the way the other devices do. There may of course be a manual way of inputting the key, but this may necessitate having the key in written form, which in a way also increases the security risk.

It can thus be appreciated that there is a need for a solution that enables devices non-compliant with the security measures in a network to be securely connected to the network.

The present invention provides such a solution.

### SUMMARY OF THE INVENTION

In a first aspect, the invention is directed to a first device for connecting a second device to a network. The first device comprises a first port for connection to the network, a second port for connection to the second device, and a memory for storing a secret. The first device further comprises a processor adapted to detect if the connection between the second port and the second device is broken and to erase the secret if it is detected that the connection is broken.

In a preferred embodiment, the secret is a key of a symmetrical encryption algorithm used in the network.

In a further preferred embodiment, the secret is an decryption key of an asymmetrical encryption algorithm used in the network.

In another preferred embodiment, the processor is adapted to detect if the connection is broken by monitoring physical layer signals.

In yet another preferred embodiment, the processor is further adapted to use the secret to perform authentication with a third device located in the network upon connection to the network.

In a second aspect, the invention is directed to a method of protecting a connection to a network. The method is performed at a first device that stores at least one secret and is connected to the network and to a second device. The first device monitors the connection to the second device and erases the at least one secret if the connection to the second device is broken.

### BRIEF DESCRIPTION OF THE DRAWINGS

Preferred features of the present invention will now be described, by way of example, with reference to the accompanying drawings, in which:
Fig. 1, already described, illustrates an exemplary prior art network;
Fig. 2 illustrates an exemplary network according to a preferred embodiment of the invention
Fig. 3 illustrates an interface box 210 according to a preferred embodiment of the invention; and Fig. 4 is a flowchart illustrating the state machine of the interface box 210 according to the invention.

### DETAILED DESCRIPTION OF PREFERRED EMBODIMENTS

Figure 2 illustrates an exemplary network according to the invention. The network may be seen as part of the network of Figure 1 with the addition of a device according to a preferred embodiment of the invention; reference numbers from Figure 1 are reused where applicable.

The network 200 comprises a switch 110, and a storage 120 that comprises a key 220 necessary for encryption and decryption in the network 200. The network 200 further comprises a device 165, for example a camera, that is unable to comply with the encryption/decryption and/or authentication method used in the network. In order to make it possible to encrypt/decrypt the content captured by the camera 165, the network 200 further comprises an interface box 210 that stores at least one encryption/decryption key (K) 222 and is able to decrypt/encrypt data to and from the camera 165. The interface box 210 is adapted to accept an encryption/decryption key just like other compliant devices in the network 200. As mentioned hereinbefore, the encryption/decryption may for example be on the entire data produced by the camera 165 or, preferably, only on the payload of any packets to be sent.

However, use of the interface box 210 creates a further problem: since the interface between the interface box 210 and the camera 165 is unencrypted, there is nothing that will hinder someone from unplugging the camera 165 and plugging another device in its place in order to eavesdrop or insert unwanted content.

The present invention provides a solution to this problem too, by ensuring that a device connected to an interface box may not be replaced. In brief, this is performed by using the connection/disconnection detection mechanism available on the Ethernet ports physical layer to automatically reset the interface box when a disconnection of a device connected to one of its ports is detected. A reset erases any encryption/decryption keys stored in the interface box.

The problem with encryption/decryption just described may also apply to authentication.

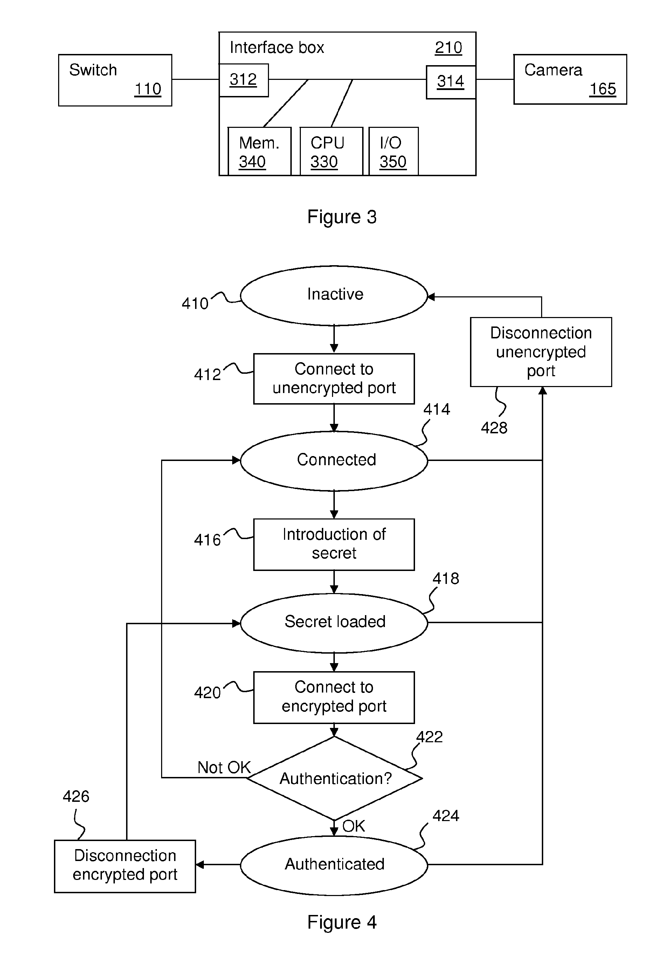

Figure 3 illustrates an interface box 210 according to a preferred embodiment of the invention. The interface box 210 comprises a first port 312 through which it is connected - possibly via a wireless connection - to a switch 110 in the network 100, and a second port 314 through which it is connected to a camera 165. The skilled person will appreciate that the connections to the switch 110 and the camera 165 are only examples of connections for illustrative purposes. The interface box 210 further comprises a memory 340 adapted to store at least one secret such as an encryption key and/or a decryption key (both keys are not necessary if the interface box 210 is intended for one-way use only, such as for example if data is meant to go from the camera 165 only or to a display only). It will also be noted that if symmetric encryption is used, a single cryptographic key will be used for both encryption and decryption, while separate cryptographic keys are used for encryption and decryption if asymmetrical encryption is used in both directions. It should be noted that it is preferred to protect data that comes from the network (i.e. decryption needed) or is intended for it (i.e. encryption needed).

The interface box 210 also comprises at least one processor (CPU) 330 (hereinafter in the description denoted by "processor" in the singular, even though it should be understood that more than one processor may be employed) adapted to encrypt data using an encryption key, to decrypt data (using the same key or a specific decryption key), and to monitor disconnection of a device connected to any of its ports. If necessary, the processor also uses a secret to perform authentication following a process used in the network. It should be noted that the authentication secret is not necessarily the same secret for encryption/decryption, although the same secret is used for both purposes in a preferred embodiment.

Furthermore, the processor 330 is further adapted to erase at least one of the keys, preferably all the keys, stored in the memory 340 upon detection of disconnection of a device connected to its ports. In addition, the interface box 210 comprises an interface (I/O) 350 adapted to receive at least one secret, such as an encryption key, a decryption key, and authentication data. The interface 350 is preferably an interface adapted to interact with a portable storage medium, such as a smartcard, inserted by a user, but may for example also be a user interface. The interface box 210 may further comprise batteries (not shown) for providing current to it.

Figure 4 is a flowchart illustrating the state machine of the interface box 210 according to the invention; the Figure also illustrating a method. The initial state 410 of the interface box 210 is "inactive," meaning that there are no connections to its ports 312, 314 and that no secret, such as an encryption key, available in it. When a connection is made 412, of for example the camera 165, to the second port 314, the interface box 210 passes to "connected" 414 in which at least one secret, e.g. at least one cryptographic key, may be introduced 416 (via the interface 350) so that the state passes to "secret loaded" 418. Then, upon connection 420, of the switch 110, to the first port 312, authentication 422 of the interface box 210 may commence, preferably initiated by the switch 110 or a special management device (not shown).

If authentication fails, i.e. if the correct secret has not been introduced, then the interface box 210 preferably erases the (erroneous) secret and returns to the "connected" state 414. On the other hand, if the authentication succeeds, the interface box 210 passes to an authenticated state 424 in which it may use the secret to securely communicate data input by the camera 165 to the switch 110 for further routing in the network 200.

If the connection to the first port 312 is disconnected 426 in the authenticated state 424, then the interface box 210 returns to the "secret loaded" state 418 in which no further communication is possible and in which a new connection and subsequent authentication must be performed in order for further communication to be possible.

In the "connected" 414, "secret loaded" 418, and "authenticated" 424 states, if the connection to the second port 314 (i.e. the one to the camera 165 in the example) is disconnected, then this is detected by the processor 330 and the secret is erased and the interface box 210 goes back to the "inactive" state.

The processor 330 may detect connections and disconnections to its port by the mechanism described hereinafter. In a serial link, there are some means of detecting activity on the pipe.

For example, as soon as a device is connected to another device or a network, signals are continually sent over the physical layer even in the absence of "real" traffic. These signals allow discovery of the characteristics of the connection such as the maximum transmission speed. Inversely, once the connection is broken, these signals cease; at the very least, the signals will not be received.

As another example, the clock recovery phase lock loop (PLL) can deliver a signal that indicates whether or not the loop is locked. Once again, when the loop is broken, the signal is interrupted.

On a higher protocol level, the auto-negotiation success between a pair of transceivers validates the link between them. Continuous auto-negotiation makes sure that the connection is still unbroken.

It is also possible to flood the connection with signals so as to be able to detect when the connection is broken.

The person skilled in the art will appreciate the possibility to use any of these mechanisms to detect disconnection at the interface box. It should be noted that it is also possible to combine a plurality of mechanisms in order to increase the security of the system.

As will be appreciated, the present invention enables secure connection of a device that is not able to receive a secret shared by other devices in the network. The secret is inserted into an interface box that monitors the connection to the device and erases the secret if the connection is broken.

It will be understood that the present invention has been described purely by way of example, and modifications of detail can be made.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A first device (210) for connecting a second device (165) to a network (100), the first device comprising:
- a first port (312) adapted to be connected to the network (100);
- a second port (314) adapted to be connected to the second device (165); and
- a memory (340) for storing a secret;
the first device being **characterised in that** it further comprises a processor (330) adapted to:
detect if the connection between the second port (314) and the second device (165) is broken; and
erase the secret if it is detected that the connection is broken.

2. The device of claim 1, wherein the secret is a key of a symmetrical encryption algorithm used in the network (100).

3. The device of claim 1, wherein the secret is a decryption key of an asymmetrical encryption algorithm used in the network (100).

4. The device of claim 1, wherein the processor (330) is adapted to detect if the connection is broken by monitoring physical layer signals.

5. The device of claim 1, wherein the processor (330) is further adapted to use the secret to perform authentication with a third device, located in the network (100), upon connection to the network (100).

6. A method of protecting a connection to a network (100), the method being performed at a first device (210) storing at least secret and being connected to the network (100) and to a second device (165), the method comprising the steps of:
monitoring the connection to the second device (165); and
if the connection to the second device (165) is broken, erasing the secret.
